(19) Europäisches Patentamt
European Patent Office
Office européen des brevets

(11) Veröffentlichungsnummer: **0 373 416 B1**

# (12) EUROPÄISCHE PATENTSCHRIFT

(45) Veröffentlichungstag der Patentschrift: **29.09.93**

(51) Int. Cl.5: **C09B 67/22**, B41M 5/145, B41M 5/30

(21) Anmeldenummer: **89121952.9**

(22) Anmeldetag: **28.11.89**

## (54) Mischung aus 3,1-Benzoxazinen und Fluoranen.

(30) Priorität: **10.12.88 DE 3841668**

(43) Veröffentlichungstag der Anmeldung: **20.06.90 Patentblatt 90/25**

(45) Bekanntmachung des Hinweises auf die Patenterteilung: **29.09.93 Patentblatt 93/39**

(84) Benannte Vertragsstaaten: **BE DE ES FR GB IT**

(56) Entgegenhaltungen:
**DE-A- 3 225 028**
**DE-A- 3 622 262**
**FR-A- 2 445 333**

(73) Patentinhaber: **BAYER AG**
**D-51368 Leverkusen(DE)**

(72) Erfinder: **Berneth, Horst, Dr.**
**Erfurther Strasse 1**
**D-5090 Leverkusen 1(DE)**
Erfinder: **Klug, Günter, Dr.**
**Wiener Neustädter Strasse 140**
**D-4019 Monheim(DE)**
Erfinder: **Jabs, Gert, Dr.**
**Wingensiefer Kamp 25**
**D-5068 Odenthal(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 373 416 B1

Rank Xerox (UK) Business Services
(3.10/3.6/3.3.1)

## Beschreibung

Es ist bekannt, daß 3,1-Benzoxazine (EP-A 187 329, DE-A 36 22 262) oder Fluorane (DE-A 20 24 859, 22 02 315 und 22 44 873) als Farbbildner für druck- oder wärmeempfindliche Aufzeichnungssysteme geeignet sind.

Bei beiden Substanzklassen gibt es geeignete Substitutionsmuster, die die Entwicklung eines schwarzen Farbtons, wenn auch teilweise mit rötlicher, bläulicher oder grünlicher Nuance, erlauben.

Allerdings zeigen häufig der entwickelte Farbstoff, aber auch der nicht entwickelte mikroverkapselte Farbbildner nicht voll befriedigende Lichtechtheiten.

Bei schwarzentwickelnden Farbbildnern vom 3,1-Benzoxazintyp ergibt die Belichtung des entwickelten Farbstoffes, die Kopiebelichtung, häufig eine Nuancenverschie-bung ins Grünliche, während die Belichtung des unentwickelten Farbbildners, die Kapselbelichtung, lediglich zu einer geringen Abschwächung der Intensität der dann noch erzielbaren Kopie führt.

Bei schwarzentwickelnden Farbbildnern vom Fluorantyp ergeben Kopie- und Kapselbelichtung häufig eine Nuancenverschiebung ins Rötliche mit schwachem bis stärkerem Intensitätsabfall.

Aus der DE-OS 32 25 028 sind Fluoranderivate bekannt, die eine Arylaminogruppe in der 2-Stellung des Fluorangerüstes und ein Halogenatom in der 3-Stellung des Fluorangerüstes besitzen. Aus der gleichen Schrift ist bekannt, daß man derartige Fluoranderivate als Farbstoffvorläufer in Aufzeichnungsmaterialien verwenden kann.

Es wurde nun gefunden, daß Mischungen aus 3,1-Benzoxazinen und Fluoranen verbesserte Lichtechtheiten besitzen und somit im belichteten und - überraschenderweise - auch im unbelichteten Zustand intensivere Kopien liefern als die Komponenten selbst.

Gegenstand der Erfindung ist demnach eine Mischung aus a) mindestens einem 3,1-Benzoxazin der Formel

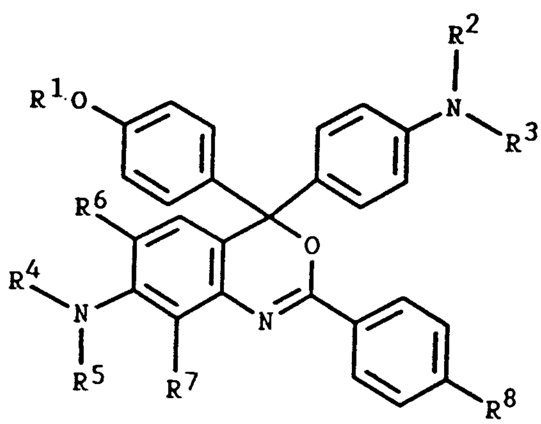

(I),

worin

| | |
|---|---|
| $R^1$ bis $R^5$ | unabhängig voneinander gegebenenfalls verzweigtes $C_1$-$C_4$-Alkyl, |
| einer der Reste $R^6$ oder $R^7$ | Methyl, Ethyl, Methoxy, Ethoxy oder Chlor |
| und der andere | Wasserstoff und |
| $R^8$ | Wasserstoff, Methyl oder Chlor bedeuten, |

und b) mindestens einem Fluoran der Formel

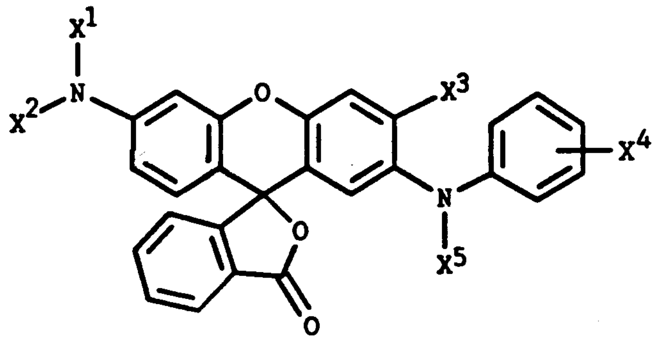

(II)

worin

| | |
|---|---|
| $X^1$ und $X^2$ | unabhängig voneinander Wasserstoff, gegebenenfalls verzweigtes $C_1$-$C_8$-Alkyl, das durch $C_1$-$C_3$-Alkoxy, Cyclohexyl, Phenyl oder heterocyclische Reste aus der Reihe der ggf. teilhydrierten oder hydrierten Furane, Pyrrole und Pyridine substituiert sein kann, Allyl, Cyclopentyl oder Cyclohexyl oder |
| $NX^1X^2$ | Pyrrolidino, Piperidino oder Morpholino, |
| $X^3$ | Wasserstoff, Methyl, Methoxy oder Chlor, |
| $X^4$ | Wasserstoff, Methyl, Trifluormethyl, Fluor, Chlor, Acetyl, Cyano oder Anilino, die in o-, m- oder p-Stellung stehen können, und |
| $X^5$ | Wasserstoff, Methyl, Ethyl oder Benzyl bedeuten, |

sowie deren Verwendung als Farbbildner für druck- und wärmeempfindliche Aufzeichnungsmaterialien und solche Aufzeichnungsmaterialien.

Bevorzugt ist eine Mischung aus 3,1-Benzoxazinen der Formel (I), worin

| | |
|---|---|
| $R^1$ - $R^5$ | Methyl oder Ethyl, |
| einer der Reste $R^6$ oder $R^7$ | Methyl, Methoxy oder Chlor |
| und der andere | Wasserstoff und |
| $R^8$ | Wasserstoff, Methyl oder Chlor bedeuten, |

und Fluoranen der Formel (II), worin

| | |
|---|---|
| $X^1$ und $X^2$ | Wasserstoff, Methyl, Ethyl, Propyl, 2-Propyl, Butyl, 2-Butyl, 2-Methyl-1-propyl, Pentyl, 2-Pentyl, 3-Pentyl, 2-Methyl-1-butyl, 3-Methyl-1-butyl, 2-Ethyl-1-propyl, Hexyl, 2-Hexyl, 3-Hexyl, 4-Methyl-1-pentyl, 2-Methoxyethyl, 2-Ethoxy-ethyl, 3-Methoxypropyl, 3-Ethoxy-propyl, 4-Methoxy-butyl, 4-Ethoxybutyl, Cyclohexylmethyl, Benzyl,Furfuryl, Pyrrolidin-2-yl-methyl, 2-(2- oder 4-Pyridyl)ethyl, Allyl, Cyclopentyl oder Cyclohexyl oder |
| $NX^1X^2$ | Pyrrolidino, Piperidino oder Morpholino, |
| $X^3$ | Wasserstoff, Methyl oder Chlor, |
| $X^4$ | Wasserstoff, Methyl, Fluor, Chlor oder Anilino, die in o-, m- oder p-Stellung stehen können, und |
| $X^5$ | Wasserstoff oder Methyl bedeuten. |

Besonders bevorzugt ist eine Mischung aus 3.1-Benzoxazinen der Formel (I), worin

| | |
|---|---|
| $R^1$ - $R^5$ | Methyl oder Ethyl, |
| einer der Reste $R^6$ oder $R^7$ | Methyl oder Chlor |
| und der andere | Wasserstoff und |
| $R^8$ | Wasserstoff oder Chlor bedeuten, |

und Fluoranen der Formel (II), worin

| | |
|---|---|
| $X^1$ und $X^2$ | Methyl, Ethyl, Propyl, 2-Propyl, Butyl, 2-Methyl-1-propyl, Furfuryl, 3-Ethoxy-propyl oder Cyclohexyl, |
| $X^3$ | Wasserstoff oder Methyl, |
| $X^4$ | Wasserstoff, o-ständiges Methyl, Fluor oder Chlor oder p-ständiges Anilino und |
| $X^5$ | Wasserstoff bedeuten. |

Ganz besonders bevorzugt ist eine Mischung aus 3,1-Benzoxazinen der Formel

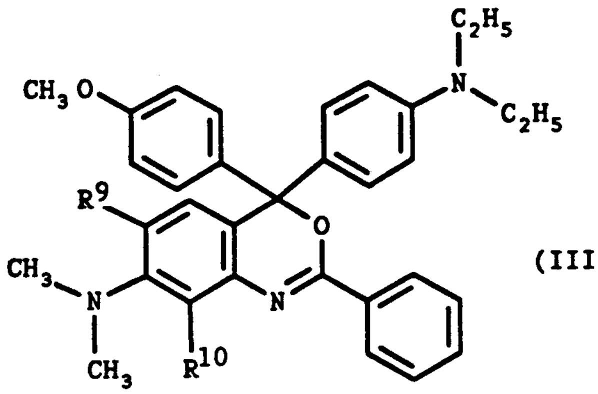

(III),

worin

- $R^9$ Methyl und
- $R^{10}$ Wasserstoff oder
- $R^9$ Wasserstoff und
- $R^{10}$ Methyl bedeuten,

und Fluoranen der Formel

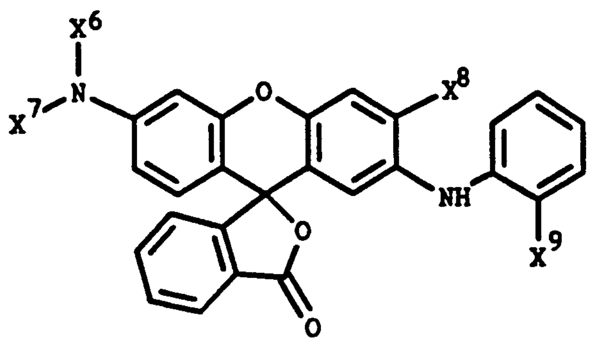

(IV),

worin

- $X^6$ Methyl, Ethyl, Propyl oder Butyl,
- $X^7$ Methyl, Ethyl, Propyl, Butyl, Furfuryl oder Cyclohexyl,
- $X^6$ Wasserstoff oder Methyl und
- $X^6$ Wasserstoff oder Chlor bedeuten.

Bei den Mischungen werden in der Regel jeweils ein 3,1-Benzoxazin und ein Fluoran gemischt. Das Mischungsverhältnis liegt zwischen 5/95 und 95/5, vorzugsweise zwischen 20/80 und 80/20. Besonders bevorzugt sind Mischungen, bei denen die Benzoxazinkomponente in 50 % und mehr Anteil enthalten ist.

Es können aber auch die Benzoxazin- und/oder Fluorankomponente jeweils selbst Mischungen sein. Bevorzugt sind solche Mischungen, bei denen die Benzoxazinkomponente Mischung zweier Benzoxazine ist, die Isomere bezüglich der Reste $R^6$ und $R^7$ bzw. $R^9$ und $R^{10}$ sind, beispielsweise seien genannt:

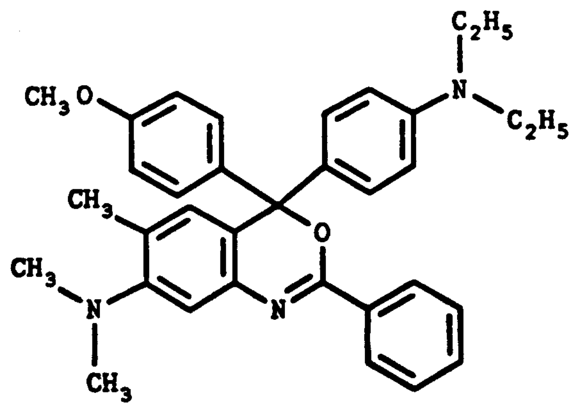

und

(V)

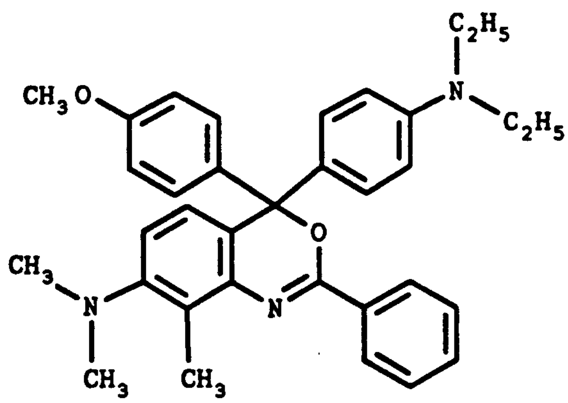

(VI)

Solche Isomerenmischungen können ein Mischungsverhältnis von 99/1 bis 1/99 aufweisen, vorzugsweise 95/5 bis 5/95, besonders bevorzugt 90/10 bis 10/90.

Ein weiterer Gegenstand der Erfindung ist die Verwendung der Mischungen aus 3,1-Benzoxazinen der Formel (I) und Fluoranen der Formel (II) als Farbbildner in druck- oder wärmeempfindlichen Aufzeichnungsmaterialien.

Die erfindungsgemäßen Mischungen zeigen sowohl auf phenolichen Unterlagen wie auch besonders auf aktivierten Tonen eine gute Farbintensität. Ihre Entwicklungsgeschwindigkeit ist von den Substituenten nahezu unabhängig. Im allgemeinen zeichnen sie sich durch eine hohe Entwicklungsgeschwindigkeit aus bei gleichzeitig reduzierter Empfindlichkeit der Aufzeichnungsmaterialien gegenüber unbeabsichtigter vorzeitiger Entwicklung.

Ihr Entwicklungsfarbton wird sofort erreicht, ohne daß unerwünschte Nuancenveränderungen während oder im Anschluß an die Entwicklung auftreten.

Ein druckempfindliches Material besteht beispielsweise aus mindestens 1 Paar von Blättern, die eine erfindungsgemäße Farbbildnermischung, gelöst oder dispergiert in einem nichtflüchtigen organischen Lösungsmittel, und einen Entwickler enthalten.

Solche Verfahren und Zubereitungen sind beispielsweise aus den US-A 2 800 457, 2 800 458, 2 948 753, 3 096 189 und 3 193 404 und aus DE-A 25 55 080 und 27 00 937 bekannt.

Um eine frühzeitige Aktivierung der in dem druckempfindlichen Aufzeichnungsmaterial vorhandenen Farbbildner zu verhindern, werden diese vorzugsweise in Mikrokapseln eingeschlossen, die sich in der Regel durch Druck zerbrechen lassen.

Als Kapselwandmaterialien eignen sich z.B. Gelatine/Gummi arabicum, Polyamide, Polyurethane, Polyharnstoffe, Polysulfonamide, Polyester, Polycarbonate, Polysulfonate, Polyacrylate und Phenol-, Melamin- oder Harnstoff-Formaldehyd-Kondensate, wie sie beispielsweise in M. Gutcho, Capsule Technology and Microencapsulation, Noyes Data Corporation 1972, G. Baster, Microencapsulation, Processes and Applications, Herausgeber J.E. Vandegaar, und in DE-A 22 37 545 und 21 19 933 beschrieben sind.

Bevorzugt werden beim erfindungsgemäßen Verfahren Mikrokapseln verwendet, deren Hüllen aus Polyadditionsprodukten aus Polyisocyanaten und Polyaminen bestehen.

Zur Herstellung derartiger Mikrokapseln einzusetzende Isocyanate sind Diisocyanate, Polyisocyanate, Diisocyanate mit Biuretstruktur, durch di- oder trifunktionelle Alkohole modifizierte Polyisocyanate oder andere modifizierte Isocyanate, z.B. solche der Formel:

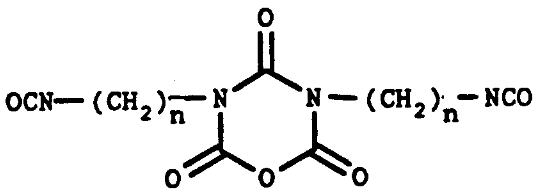

n = 3-6

(VII)

Zur Umsetzung mit den genannten Isocyanaten geeignete Diamine sind aliphatische primäre oder sekundäre Di- oder Polyamine.

Isocyanate, Amine, Lösungsmittel und ein geeignetes Herstellungsverfahren für solche Mikrokapseln sind beispielsweise in DE-A 32 03 059 beschrieben.

Ebenfalls bevorzugt werden Mikrokapseln verwendet, deren Hüllen aus Polyamiden oder Melamin-Formaldehyd-Kondensaten oder Gelatine/Gummi arabicum bestehen.

Als Entwickler sind Tone, sauer modifizierte Tone, Oxide oder saure Salze sowie monomere, harzartige oder polymere Phenole, Carbonsäuren, Salicylsäuren oder Metallsalze davon zu nennen.

Thermoreaktive Aufzeichnungssysteme umfassen z.B. wärmeempfindliche Aufzeichnungs- und Kopiermaterialien und -papiere.

Ein solches Material ist beispielsweise in der DE-A 25 55 080 beschrieben.

Als Entwickler eignen sich die gleichen Elektronenakzeptoren, wie sie in druckempfindlichen Papieren verwendet werden, vorzugsweise phenolische Verbindungen, die beispielsweise in der DE-A 12 51 348 beschrieben sind, sowie Borsäure und organische, vorzugsweise aliphatische Dicarbonsäuren.

Eine weiteres geeignetes thermoreaktives Entwicklungssystem ist in DE-A 33 37 296 beschrieben, bei dem sauer modifizierte Polymerisate, vorzugsweise des Acrylnitrils als Entwickler wirken.

In üblicher Weise werden CB-Papiere, die mit Kapseln beschichtet sind und die erfindungsgemäßen Mischungen der Farbbildner in einem organischen Lösungsmittel gelöst enthalten, mit handelsüblichen CF-Papieren, die mit den oben genannten Entwicklern beschichtet sind, in Kontakt gebracht oder aber Kapseln, die die erfindungsgemäßen Mischungen der Farbbildner in einem organischen Lösungsmittel gelöst enthalten, zusammen mit den oben genannten Entwicklern auf der Oberseite eines Blattes in üblicher Weise aufgebracht und als "self-contained-papers" in einem Durchschreibesatz in üblicher Weise verwendet. Die Kopie entsteht durch bildmäßigen mechanischen Druck auf die Oberfläche durch Entwicklung der aus den zerstörten Kapseln austretenden Farbbildnerlösung auf der Oberfläche des CF- oder SC-Papiers.

Zur Messung der Remission wird beispielsweise ein großflächiger Abdruck durch druckbedingte Zerstörung der die erfindungsgemäße Farbbildnermischung enthaltenden Kapseln eines CB-Papiers auf die den Farbentwickler enthaltende Vorderseite eines CF-Papiers oder ein großflächiger Abdruck durch druckbedingte Zerstörung der die erfindungsgemäße Farbbildnermischung enthaltenden Kapseln im Gemisch mit den Farbentwicklern auf der Vorderseite eines SC-Papiers durchgeführt.

Die Intensität dieser Kopie kann mit den üblichen optischen Spektralphotometern, wie beispielsweise einem E1 Repho 44381 der Fa. Carl Zeiss, bestimmt werden. Die Intensität ergibt sich dann aus der Höhe des Absorptionswertes. Dieser wird berechnet nach:

$$\%\ \text{Abs.} = \frac{\%\ \text{Rem.}_{CF} - \%\ \text{Rem.}_{Kopie}}{\%\ \text{Rem.}_{CF}} \cdot 100\ ,$$

wobei gilt:
% Abs. = Absorptionswert, entspr. Intensität
% $Rem._{CF}$ = Remission des CF-Papiers
% $Rem._{Kopie}$ = Remission der Kopie

Zur Bestimmung der Lichtechtheiten wird die Kopie (CF-Fading) oder die kapselbeschichtete CB- oder SC-Seite (CB-Decline) 48 h mit Tageslichtlampen bestrahlt.

Die Intensität der belichteten Kopie (CF-Fading) wird wie oben bestimmt und der Farbton mit dem ursprünglichen bei Augenschein verglichen.

Bei Belichtung der kapselbeschichteten Seite des CB-Papiers oder der Oberseite eines SC-Papiers wird anschließend durch Druckausübung eine Kopie erzeugt. Ihre Intensität (CB-Decline) wird wie oben bestimmt und zusammen mit dem Farbton mit der Kopie eines nicht belichteten CB- oder SC-Papiers analog verglichen.

Schwarze Kopien, die durch Entwicklung aus den erfindungsgemäßen Farbbildnermischungen hervorgegangen sind, zeigen dabei deutlich höhere Intensitäten, auch bei CF-Fading und CB-Decline, sowie eine geringere Verschiebung des Farbtons als Kopien, die aus gleichkonzentrierten Farbbildnerlösungen der einzelnen Farbbildnerkomponenten hervorgegangen sind.

Beispiel A: Herstellung einer Mikrokapseldispersion

In 174 g einer Farbgeberlösung, die zu 5 % Einzelfarbbildner oder die erfindungsgemäße Farbbildnermischung in einem Isomerengemisch von Diisopropylnaphthalin enthält, werden 26 g 3,5-Bis-(6-isocyanatohexyl)-2H-1,3,5-oxadiazin-2,4,6-(3H,5H)-trion eingerührt. Diese Mischung wird mit 251 g einer 0,5%igen Polyvinylacetatlösung (Mowiol® 26/88, Fa. Hoechst AG) an einem Rotorstatordispergiergerät emulgiert, so daß die mittlere Tropfengröße der Emulsion 7 µm beträgt. Nun werden unter Rühren 49 g einer 9%igen Diethylentriaminlösung zugegeben und 2 h bei 60 °C getempert. Man erhält so eine Mikrokapseldispersion, deren Trockengehaltsbestimmung einen Gewichtsanteil von 39,8 % ergibt.

Beispiel B: Herstellung eines CB-Papiers

Zu 12,9 g ca. 40%iger Kapseldispersion werden 2,1 g Arbocell® BE 600/30, 2,0 g Binder Baystal® P 1700 und 16,3 g Wasser eingerührt. Diese Mischung wird auf ein Basispapier (40 g/$m^2$) mittels eines 40 µm Rakels aufgetragen und getrocknet. Man erhält so ein CB-Papier mit einem Beschichtungsgewicht von ca. 5,5 g/$m^2$.

Beispiel C: Herstellung einer Kopie

In üblicher Weise werden die in Beispiel B hergestellten CB-Papiere mit einem handelsüblichen CF-Papier, dessen Nehmerschicht aus aktiviertem Ton besteht (Reacto, Fa. Köhler) in Verbindung gebracht. Die Kopie entsteht dabei durch 304fachen Abdruck des Buchstabens w auf einem Feld von 4 x 4 $cm^2$ in engstmöglicher Schreibweise mit einer elektrischen Schreibmaschine der Fa. Olympia Werke AG, Wilhelmshaven, Modell Olympia SGED 52, bei niedrigster Anschlagstärke.

Die Intensität wird durch die Remission der 4. Kopie eines Satzes, bei dem Blatt 1-3 aus einem Rohpapier (46 g/$m^2$), Blatt 4 aus dem in Beispiel B hergestellten CB-Papier und Blatt 5 aus dem handelsüblichen CF-Papier besteht, nach der oben angegebenen Formel berechnet.

Beispiel D:

Eine nach Beispiel C hergestellte Kopie oder ein nach Beispiel B hergestelltes CB-Papier wird 48 h in einem Kasten mit Licht, welches vier 18 W-Leuchtstoffröhren (Sylvania® -Luxline ES, daylight de luxe) aussenden bestrahlt.

Im folgenden sind die Intensitäten und Farbtöne einiger ausgewählter erfindungsgemäßer Farbbildnermischungen und ihrer Komponenten sowie Intensitäten und Farbverschiebungen im CF-Fading und CB-Decline zusammengestellt.

Farbbildner $A_x$:

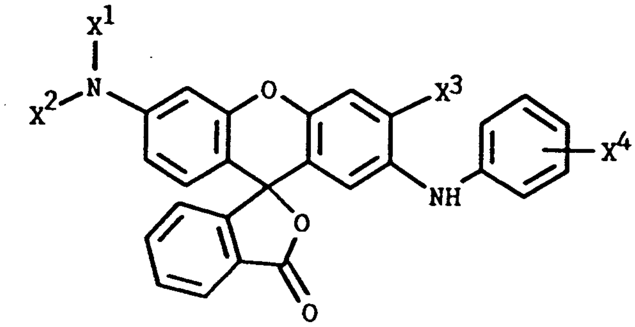

| $A_x$ | $X^1$ | $X^2$ | $X^3$ | $X^4$ |
|---|---|---|---|---|
| $A_1$ | $CH_3$ | 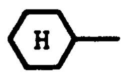 | $CH_3$ | H |
| $A_2$ | $C_2H_5$ | $C_2H_5$ | $CH_3$ | H |
| $A_3$ | $C_2H_5$ | 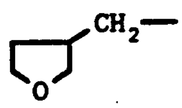 | $CH_3$ | H |
| $A_4$ | $C_4H_9$ | $C_4H_9$ | H | o-Cl |

Isomerengemisch B:

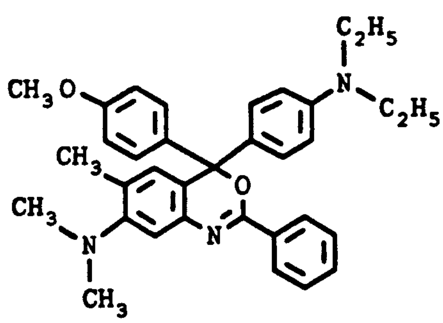

90 %

+

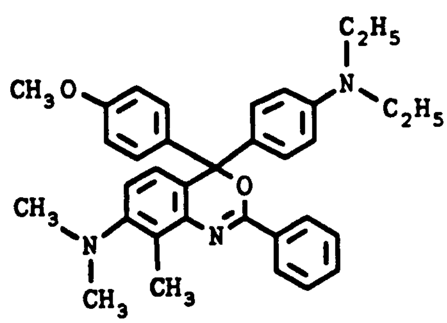

10 %

| Beisp. | Anteil Farbbildner | | | Lösungsmittel a) | Kopie | | CF-Fading | | CB-Decline | |
|---|---|---|---|---|---|---|---|---|---|---|
| | $A_x$ | $A_x$ % | B % | | Farbton | Int. % | Farbton | Int. % | Farbton | Int. % |
| 1 | - | - | 100 | U | blauschwarz | 48 | grün | 43,7 | graublau | 46,3 |
| 2 | - | - | 100 | X | blauschwarz | 50 | grün | 45,3 | graublau | 41,5 |
| 3 | $A_1$ | 100 | - | X | braunschwarz | 40 | rot | 39,3 | braun | 36,5 |
| 4 | $A_2$ | 100 | - | X | braunschwarz | 41 | rot | 39,6 | braun | 29,6 |
| 5 | $A_3$ | 100 | - | U | grau | 38 | rot | 35,6 | ocker | 6,7 |
| 6 | $A_4$ | 100 | - | U | braunschwarz | 39 | rotbraun | 32,4 | ocker | 7,0 |
| 7 | $A_1$ | 67 | 33 | U | schwarz | 53 | schwarzgrün | 52,0 | schwarz | 47,5 |
| 8 | $A_1$ | 67 | 33 | X | schwarz | 54 | schwarzgrün | 51,3 | schwarz | 52,0 |
| 9 | $A_1$ | 50 | 50 | X | schwarz | 51 | schwarzgrün | 49,9 | schwarz-braun | 47,6 |
| 10 | $A_3$ | 50 | 50 | U | schwarz | 50 | schwarzgrün | 42,0 | grau | 26,0 |
| 11 | $A_4$ | 50 | 50 | U | schwarz | 51 | schwarzgrün | 33,8 | schwarzbr. | 26,9 |
| 12 | $A_2$ | 67 | 33 | X | schwarz | 52 | schwarzgrün | 47,2 | schwarz | 45,3 |

a) U: Isomerengemisch Diisopropylnaphthalin
X: Chlorparaffin/Dodecylbenzol

Weitere geeignete Mischungen sind:

Beispiel 13:

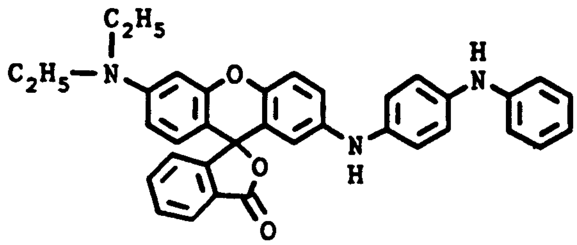
+
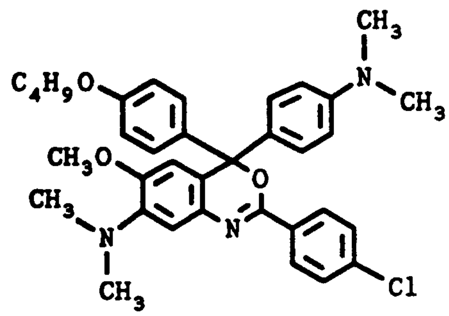

Beispiel 14

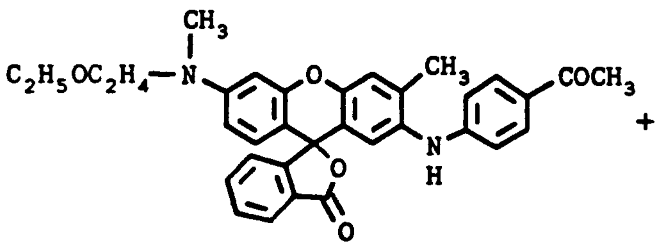
+
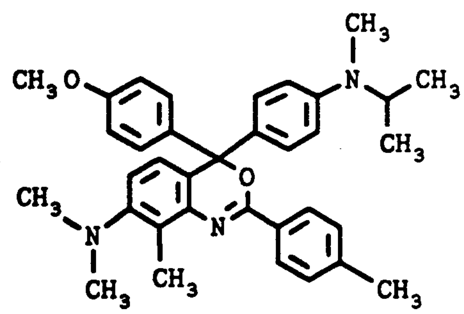

Beispiel 15

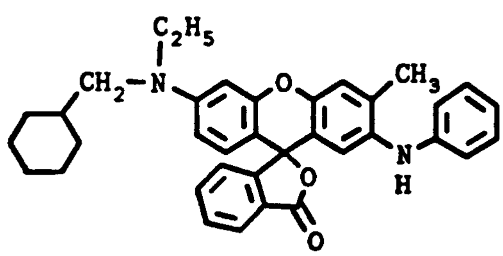
+
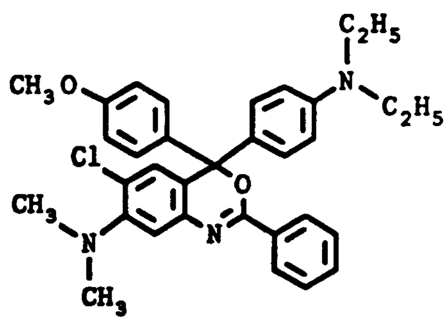

Beispiel 16

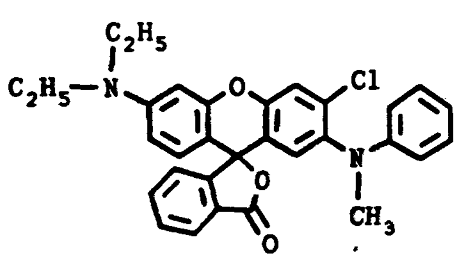
+
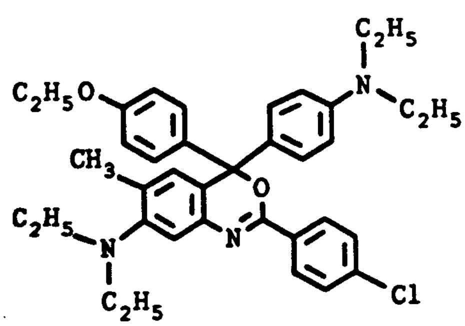

Beispiel 17

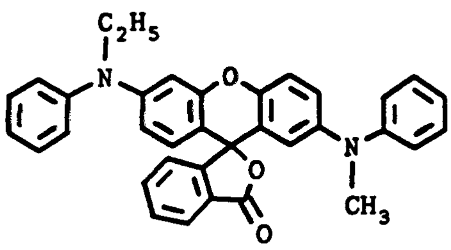

+

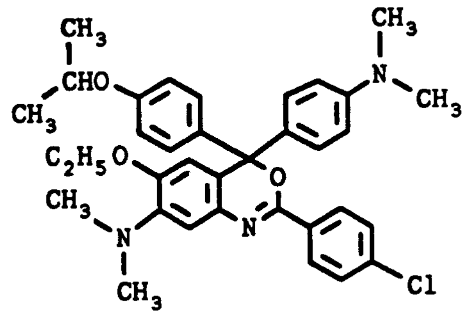

Beispiel 18

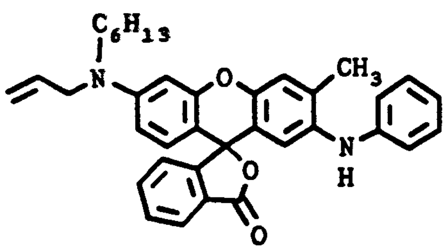

+

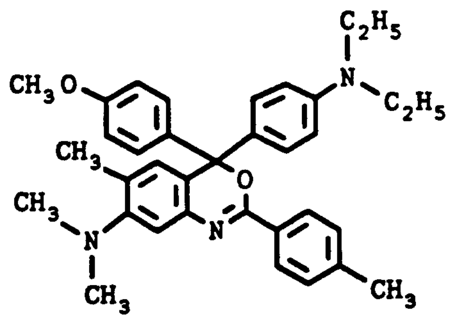

Beispiel 19

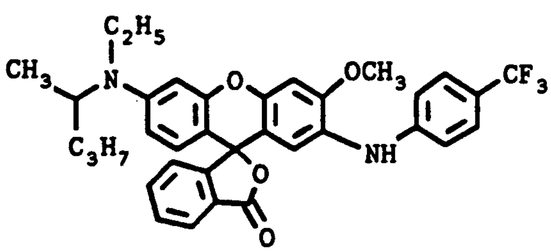

+

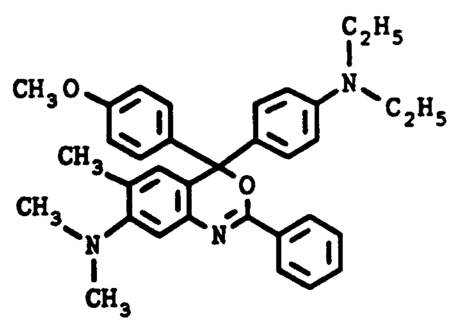

Beispiel 20

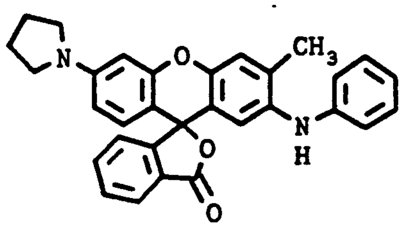

+

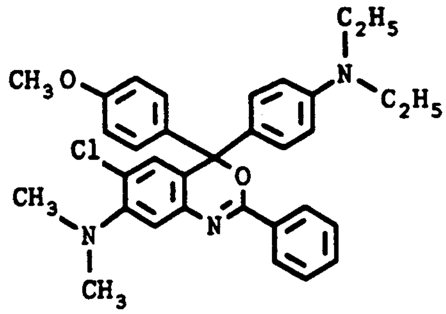

+

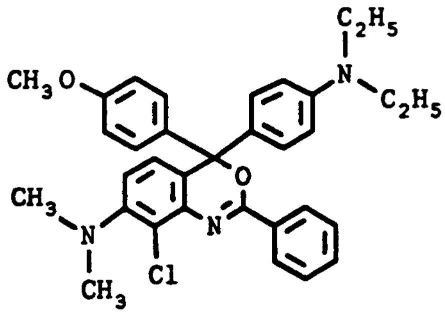

## Patentansprüche

1. Mischungen aus a) mindestens einem 3,1-Benzoxazin der Formel

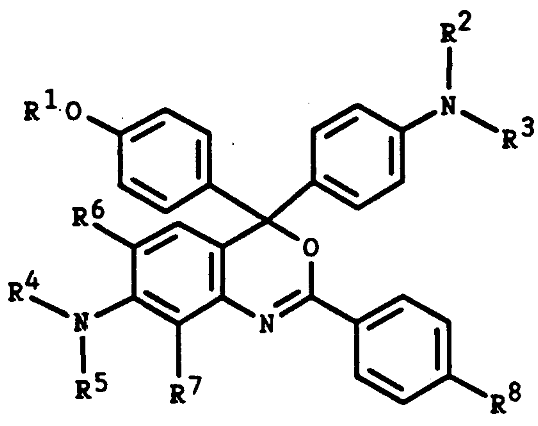

worin

| | |
|---|---|
| $R^1$ bis $R^5$ | unabhängig voneinander gegebenenfalls verzweigtes $C_1$-$C_4$-Alkyl, |
| einer der Reste $R^6$ oder $R^7$ | Methyl, Ethyl, Methoxy, Ethoxy oder Chlor |
| und der andere | Wasserstoff und |
| $R^8$ | Wasserstoff, Methyl oder Chlor bedeuten, |

und b) mindestens einem Fluoran der Formel

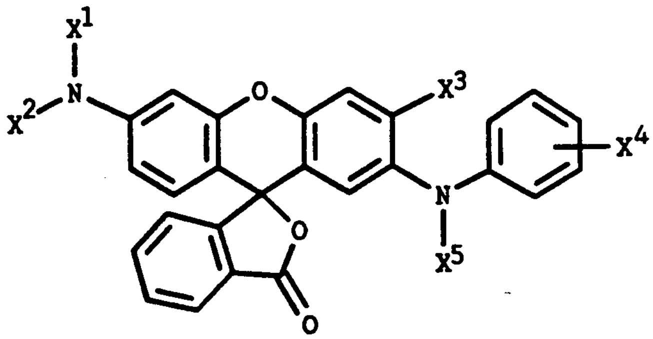

worin

| | |
|---|---|
| $X^1$ und $X^2$ | unabhängig voneinander Wasserstoff, gegebenenfalls verzweigtes $C_1$-$C_8$-Alkyl, das durch $C_1$-$C_3$-Alkoxy, Cyclohexyl, Phenyl oder heterocyclische Reste aus der Reihe der ggf. teilhydrierten oder hydrierten Furane, Pyrrole und Pyridine substituiert sein kann, Allyl, Cyclopentyl oder Cyclohexyl oder |
| $NX^1X^2$ | Pyrrolidino, Piperidino oder Morpholino, |
| $X^3$ | Wasserstoff, Methyl, Methoxy oder Chlor, |
| $X^4$ | Wasserstoff, Methyl, Trifluormethyl, Fluor, Chlor, Acetyl, Cyano oder Anilino, die in o-, m- oder p-Stellung stehen können, und |
| $X^5$ | Wasserstoff, Methyl, Ethyl oder Benzyl bedeuten. |

**2.** Mischungen gemäß Anspruch 1, dadurch gekennzeichnet, daß in der für die 3,1-Benzoxazine angegebenen Formel

| | |
|---|---|
| $R^1$ - $R^5$ | Methyl oder Ethyl, |
| einer der Reste $R^6$ oder $R^7$ | Methyl, Methoxy oder Chlor |
| und der andere | Wasserstoff und |
| $R^8$ | Wasserstoff, Methyl oder Chlor bedeuten, |

und in der für die Fluorane angegebenen Formel

| | |
|---|---|
| $X^1$ und $X^2$ | Wasserstoff, Methyl, Ethyl, Propyl, 2-Propyl, Butyl, 2-Butyl, 2-Methyl-1-propyl, Pentyl, 2-Pentyl, 3-Pentyl, 2-Methyl-1-butyl, 3-Methyl-1-butyl, 2-Ethyl-1-propyl, Hexyl, 2-Hexyl, 3-Hexyl, 4-Methyl-1-pentyl, 2-Methoxy-ethyl, 2-Ethoxy-ethyl, 3-Methoxypropyl, 3-Ethoxy-propyl, 4-Methoxy-butyl, 4-Ethoxy-butyl, Cyclohexylmethyl, Benzyl, Furfuryl, Pyrrolidin-2-yl-methyl, 2-(2-oder 4-Pyridyl)-ethyl, Allyl, Cyclopentyl oder Cyclohexyl oder |
| $NX^1X^2$ | Pyrrolidino, Piperidino oder Morpholino, |
| $X^3$ | Wasserstoff, Methyl oder Chlor, |
| $X^4$ | Wasserstoff, Methyl, Fluor, Chlor oder Anilino, die in o-, m- oder p-Stellung stehen können, und |
| $X^5$ | Wasserstoff oder Methyl bedeuten. |

**3.** Mischungen gemäß Anspruch 1, dadurch gekennzeichnet, daß in der für die 3,1-Benzoxazine angegebenen Formel

| | |
|---|---|
| $R^1$ - $R^5$ | Methyl oder Ethyl, |
| einer der Reste $R^6$ oder $R^7$ | Methyl oder Chlor |
| und der andere | Wasserstoff und |
| $R^8$ | Wasserstoff oder Chlor bedeuten, |

und in der für die Fluorane angegebenen Formel

| | |
|---|---|
| $X^1$ und $X^2$ | Methyl, Ethyl, Propyl, 2-Propyl, Butyl, 2-Methyl-1-propyl, Furfuryl, 3-Ethoxy-propyl oder Cyclohexyl, |
| $X^3$ | Wasserstoff oder Methyl, |
| $X^4$ | Wasserstoff, o-ständiges Methyl, Fluor oder Chlor oder p-ständiges Anilino und |
| $X^5$ | Wasserstoff bedeuten. |

**4.** Mischungen gemäß Anspruch 1, daurch gekennzeichnet, daß die 3,1-Benzoxazine der Formel

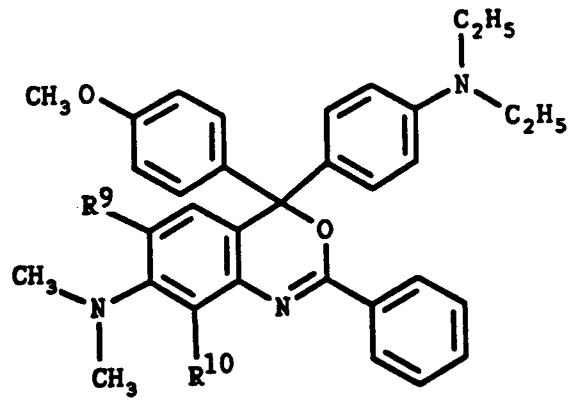

entsprechen, worin

$R^9$ Methyl und
$R^{10}$ Wasserstoff oder
$R^9$ Wasserstoff und
$R^{10}$ Methyl bedeuten,

und die Fluorane der Formel

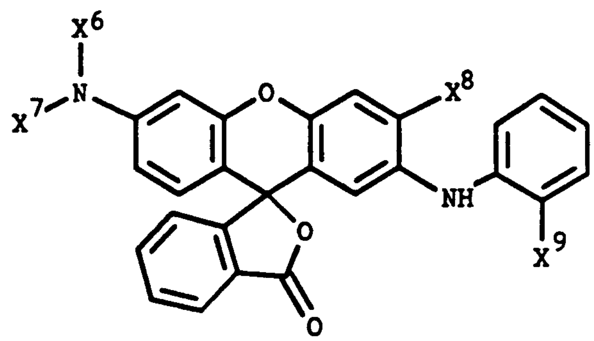

entsprechen, worin

$X^6$ Methyl, Ethyl, Propyl oder Butyl,
$X^7$ Methyl, Ethyl, Propyl, Butyl, Furfuryl oder Cyclohexyl,
$X^6$ Wasserstoff oder Methyl und
$X^6$ Wasserstoff oder Chlor bedeuten.

5. Mischungen gemäß Anspruch 1 bis 4, dadurch gekennzeichnet, daß die Benzoxazin-Komponente selbst eine Mischung darstellt, deren Komponenten sich wiederum hinsichtlich der Substituenten $R^6/R^7$ bzw. $R^9/R^{10}$ unterscheiden.

6. Mischungen gemäß Anspruch 1 bis 4, wobei das Mischungsverhältnis zwischen 5/95 und 95/5 liegt.

7. Mischungen gemäß Anspruch 1 bis 4, wobei das Mischungsverhältnis zwischen 20/80 und 80/20 liegt.

8. Mischungen gemäß Anspruch 1 bis 4, wobei 50 % oder mehr Anteil an 3,1-Benzoxazin enthalten sind.

9. Verwendung von Mischungen des Anspruchs 1 als Farbbildner für druck- oder wärmeempfindliche Aufzeichnungsmaterialien.

10. Druck- oder wärmeempfindliche Aufzeichnungsmaterialien, die Mischungen des Anspruchs 1 in ihrem Reaktantensystem enthalten.

## Claims

**1.** Mixtures of a) at least one 3,1-benzoxazine of the formula

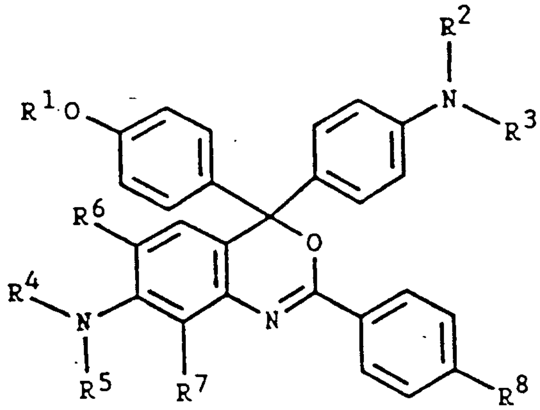

wherein

| | |
|---|---|
| $R^1$ to $R^5$ | independently of one another denote optionally branched $C_1$-$C_4$-alkyl, |
| one of the radicals $R^6$ or $R^7$ | denotes methyl, ethyl, methoxy, ethoxy or chlorine denotes hydrogen |
| and the other | and |
| $R^8$ | denotes hydrogen, methyl or chlorine, |

and b) at least one fluorane of the formula

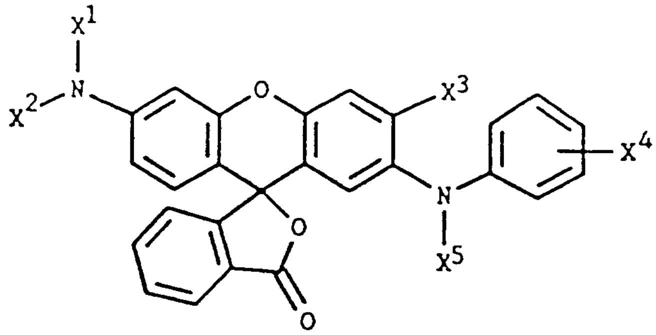

wherein

| | |
|---|---|
| $X^1$ and $X^2$ | independently of one another denote hydrogen, optionally branched $C_1$-$C_8$-alkyl, which can be substituted by $C_1$-$C_3$-alkoxy, cyclohexyl, phenyl or heterocyclic radicals from the series comprising the optionally partly hydrogenated or hydrogenated furans, pyrroles and pyridines, allyl, cyclopentyl or cyclohexyl, or |
| $NX^1X^2$ | denotes pyrrolidino, piperidino or morpholino, |
| $X^3$ | denotes hydrogen, methyl, methoxy or chlorine, |
| $X^4$ | denotes hydrogen, methyl, trifluoromethyl, fluorine, chlorine, acetyl, cyano or anilino, which can be in the o-, m- or p-position, and |
| $X^5$ | denotes hydrogen, methyl, ethyl or benzyl, |

**2.** Mixtures according to Claim 1, characterized in that in the formula given for the 3,1-benzoxazines,

| | |
|---|---|
| $R^1$ - $R^5$ | denote methyl or ethyl, |
| one of the radicals $R^6$ or $R^7$ | denotes methyl, methoxy or chlorine |
| and the other | denotes hydrogen and |
| $R^8$ | denotes hydrogen, methyl or chlorine, |

and in the formula given for the fluoranes,

| | |
|---|---|
| $X^1$ and $X^2$ | denote hydrogen, methyl, ethyl, propyl, 2-propyl, butyl, 2-butyl, 2-methyl-1-propyl, pentyl, 2-pentyl, 3-pentyl, 2-methyl-1-butyl, 3-methyl-1-butyl, 2-ethyl-1-propyl, hexyl, |

2-hexyl, 3-hexyl, 4-methyl-1-pentyl, 2-methoxy-ethyl, 2-ethoxy-ethyl, 3-methoxypropyl, 3-ethoxy-propyl, 4-methoxy-butyl, 4-ethoxy-butyl, cyclohexylmethyl, benzyl, furfuryl, pyrrolidin-2-yl-methyl, 2-(2- or 4-pyridyl)-ethyl, allyl, cyclopentyl or cyclohexyl, or

$NX^1X^2$ denotes pyrrolidino, piperidino or morpholino,

$X^3$ denotes hydrogen, methyl or chlorine,

$X^4$ denotes hydrogen, methyl, fluorine, chlorine or anilino, which can be in the o-, m- or p-position, and

$X^5$ denotes hydrogen or methyl.

**3.** Mixtures according to Claim 1, characterized in that in the formula given for the 3,1-benzoxazines,

$R^1$ - $R^5$ denote methyl or ethyl,

one of the radicals $R^6$ or $R^7$ denotes methyl or chlorine

and the other denotes hydrogen and

$R^8$ denotes hydrogen or chlorine,

and in the formula given for the fluoranes

$X^1$ and $X^2$ denote methyl, ethyl, propyl, 2-propyl, butyl, 2-methyl-1-propyl, furfuryl, 3-ethoxy-propyl or cyclohexyl,

$X^3$ denotes hydrogen or methyl,

$X^4$ denotes hydrogen, methyl, fluorine or chlorine which is in the o-position or anilino which is in the p-position and

$X^5$ denotes hydrogen.

**4.** Mixtures according to Claim 1, characterized in that the 3,1-benzoxazines correspond to the formula

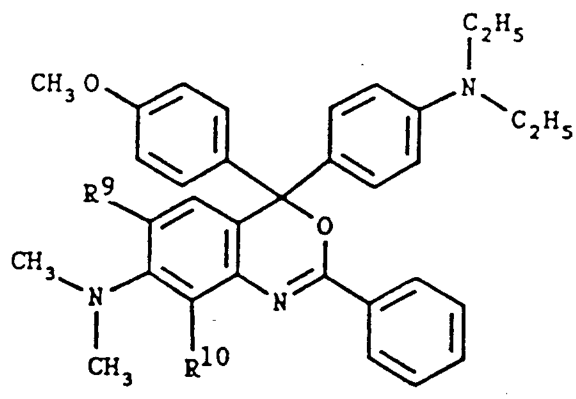

wherein

$R^9$ denotes methyl and

$R^{10}$ denotes hydrogen or

$R^9$ denotes hydrogen and

$R^{10}$ denotes methyl,

and the fluoranes correspond to the formula

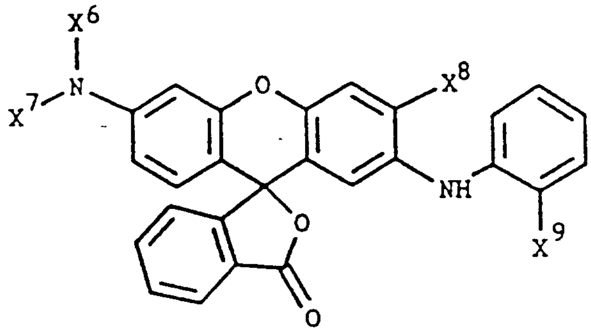

wherein

$X^6$ denotes methyl, ethyl, propyl or butyl,
$X^7$ denotes methyl, ethyl, propyl, butyl, furfuryl or cyclohexyl,
$X^6$ denotes hydrogen or methyl and
$X^6$ denotes hydrogen or chlorine.

5. Mixtures according to Claim 1 to 4, characterized in that the benzoxazine component itself is a mixture, the components of which in turn differ in respect of the substituents $R^6/R^7$ or $R^9/R^{10}$.

6. Mixtures according to Claim 1 to 4, wherein the mixing ratio is between 5/95 and 95/5.

7. Mixtures according to Claim 1 to 4, wherein the mixing ratio is between 20/80 and 80/20.

8. Mixtures according to Claim 1 to 4, which contain 3,1-benzoxazine in an amount of 50% or more.

9. Use of mixtures of Claim 1 as colour-forming agents for pressure- or heat-sensitive recording materials.

10. Pressure- or heat-sensitive recording materials containing mixtures of Claim 1 in their reactant system.

**Revendications**

1. Mélanges de a) au moins une 3,1 benzoxazine de formule

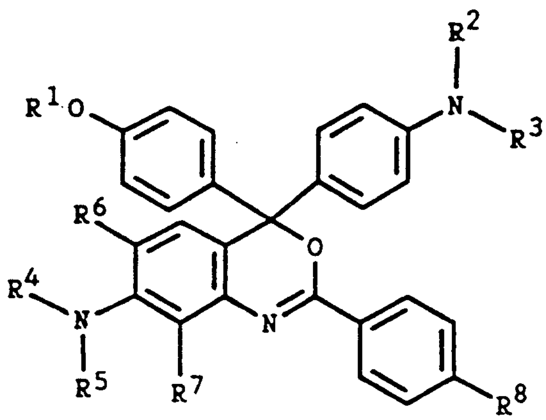

dans laquelle

| | |
|---|---|
| $R^1$ à $R^5$ | signifient indépendamment l'un de l'autre un reste alkyle en $C_1$-$C_4$ éventuellement ramifié, |
| un des restes $R^6$ ou $R^7$ | signifie méthyle, éthyle, méthoxy, éthoxy ou le chlore |

et l'autre reste signifie l'hydrogène, et
$R^8$ signifie l'hydrogène, un reste méthyle ou le chlore,
et b) au moins un fluorane de formule

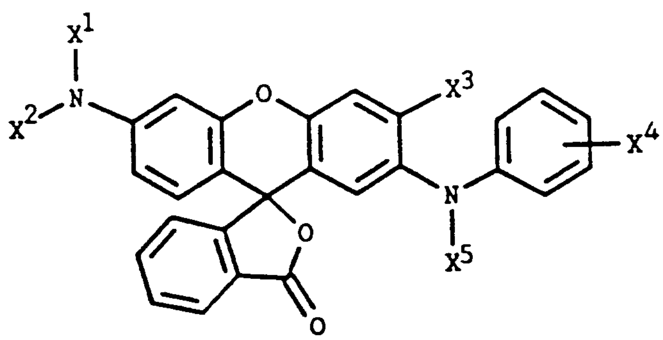

dans laquelle
$X^1$ et $X^2$ signifient indépendamment l'un de l'autre l'hydrogène, un groupe alkyle en $C_1$-$C_8$

éventuellement ramifié, pouvant être substitué par alcoxy en $C_1$-$C_3$, cyclohexyle, phényle ou des restes hétérocycliques de la série comportant des furanes, des pyrrols et des pyridines éventuellement hydrogénés ou partiellement hydrogénés, un reste allyle, cyclopentyle ou cyclohexyle, ou

$NX^1X^2$ signifient pyrrolidino, pipéridino ou morpholino,

$X^3$ signifie l'hydrogène, un groupe méthyle, méthoxy ou le chlore,

$X^4$ signifie l'hydrogène, un groupe méthyle, trifluorométhyle, le fluor, le chlore, un groupe acétyle, cyano ou anilino, pouvant se trouver en position o, m ou p, et

$X^5$ signifie l'hydrogène, un groupe méthyle, éthyle ou benzyle,

**2.** Mélanges selon la revendication 1, caractérisés en ce que, dans la formule indiquée pour les 3,1-benzoxazines

$R^1$ - $R^5$ signifient méthyle ou éthyle,

un des restes $R^6$ ou $R^7$ signifie méthyle, méthoxy ou le chlore

et l'autre signifie l'hydrogène, et

$R^8$ signifie l'hydrogène, un groupe méthyle ou le chlore,

et dans la formule indiquée pour les fluoranes

$X^1$ et $X^2$ signifient l'hydrogène, un groupe méthyle, éthyle, propyle, 2-propyle, butyle, 2-butyle, 2-méthyl-1-propyle, pentyle, 2-pentyle, 3-pentyle, 2-méthyl-1-butyle, 3-méthyl-1-butyle, 2-éthyl-1-propyle, hexyle, 2-hexyle, 3-hexyle, 4-méthyl-1-pentyle, 2-méthoxy-éthyle, 2-éthoxy-éthyle, 3-méthoxy-propyle, 3-éthoxy-propyle, 4-méthoxy-butyle, 4-éthoxy-butyle, cyclohexylméthyle, benzyle, furfuryle, pyrrolidine-2-yl-méthyle, 2-(2- ou 4-pyridyl)-éthyle, allyle, cyclopentyle ou cyclohexyle, ou

$NX^1X^2$ signifient pyrrolidino, pipéridino ou morpholino,

$X^3$ signifie l'hydrogène, un groupe méthyle, ou le chlore,

$X^4$ signifie l'hydrogène, un groupe méthyle, le fluor, le chlore, ou anilino, pouvant se trouver en position o, m ou p, et

$X^5$ signifie l'hydrogène ou un groupe méthyle.

**3.** Mélanges selon la revendication 1, caractérisés en ce que, dans la formule indiquée pour les 3,1-benzoxazines

$R^1$ - $R^5$ signifient méthyle ou hexyle,

un des restes $R^6$ ou $R^7$ signifie un groupe méthyle ou le chlore, et

$R^8$ signifie l'hydrogène ou le chlore,

et que, dans la formule donnée pour les fluoranes

$X^1$ et $X^2$ signifient un groupe méthyle, éthyle, propyle, 2-propyle, butyle, 2-méthyl-1-propyle, furfuryle, 3-éthoxypropyle, ou cyclohexyle,

$X^3$ signifie l'hydrogène ou un groupe méthyle,

$X^4$ signifie l'hydrogène, un groupe méthyle en position o, le fluor ou le chlore ou un groupe anilino en position p, et

$X^5$ signifie l'hydrogène.

**4.** Mélanges selon la revendication 1, caractérisés en ce que les 3,1-benzoxazines répondent à la formule

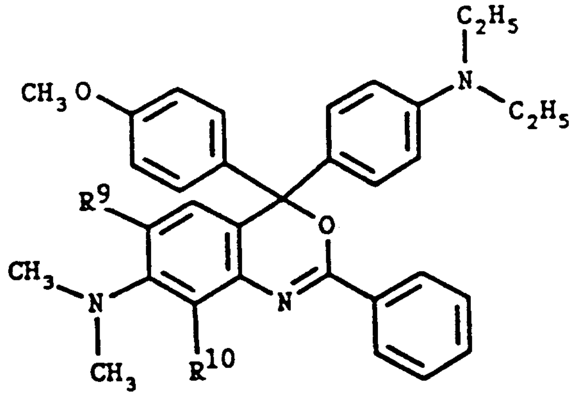

dans laquelle

$R^9$ signifie un groupe méthyle, et
$R^{10}$ signifie l'hydrogène ou
$R^9$ signifie l'hydrogène et
$R^{10}$ signifie un groupe méthyle,

et les fluoranes répondent à la formule

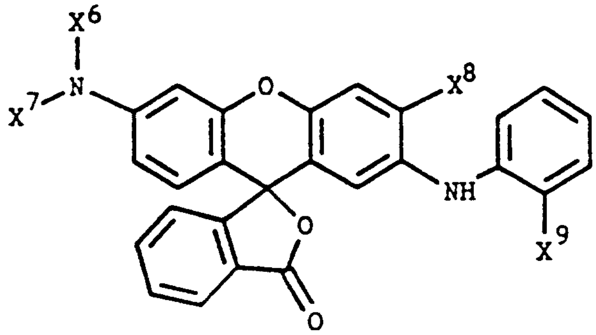

dans laquelle

$X^6$ signifie méthyle, éthyle, propyle ou butyle,
$X^7$ signifie méthyle, éthyle, propyle, butyle, furfuryle ou cyclohexyle,
$X^6$ signifie l'hydrogène ou un groupe méthyle, et
$X^6$ signifie l'hydrogène ou le chlore.

**5.** Mélanges selon les revendications 1 à 4, caractérisés en ce que le composant benzoxazine est un mélange dont les composants diffèrent par les substituants $R^6/R^7$ ou $R^9/R^{10}$.

**6.** Mélanges selon les revendications 1 à 4 dans lesquels le rapport de mélange est de 5/95 à 95/5.

**7.** Mélanges selon les revendications 1 à 4 dans lesquels le rapport de mélange est de 20/80 à 80/20.

**8.** Mélanges selon les revendications 1 à 4 contenant une part de 3,1-benzoxazine de 50% ou plus.

**9.** Utilisation des mélanges de la revendication 1 comme agents chromogènes pour des matériaux d'enregistrement sensibles à la pression ou à la chaleur.

**10.** Matériaux d'enregistrement sensibles à la pression ou à la chaleur contenant les mélanges de la revendication 1 dans leur système de réactifs.